# FASCICULE DE BREVET EUROPEEN

(11) **EP 3 808 609 B1**
(45) Date de publication et mention de la délivrance du brevet: **10.08.2022**
(21) Numéro de dépôt: 20201767.9
(22) Date de dépôt: 14.10.2020
(51) Int. Cl.: B60R 19/48

(54) **SUPPORT DE CAPTEUR POUR UN VÉHICULE**
SENSORHALTERUNG FÜR EIN FAHRZEUG
SENSOR MOUNTING FOR A VEHICLE

(30) Priorité: 15.10.2019 FR 1911455
(43) Date de publication de la demande: 21.04.2021
(73) Titulaire: Compagnie Plastic Omnium SE, 69007 Lyon (FR)
(72) Inventeur: HESSE, Frank, 01150 SAINTE-JULIE (FR)
(74) Mandataire: LLR

(56) Documents cités:
- EP-A1- 3 473 499
- DE-A1-102009 004 469
- DE-U1- 20 118 265
- FR-A1- 2 978 400
- FR-A1- 2 986 483
- US-B1- 8 894 119

## Description

L'invention concerne un support de capteur pour un véhicule, destiné en particulier à être agencé derrière un pare-chocs du véhicule.

En outre, l'invention concerne un agencement d'un support de capteur avec un capteur sur un pare-chocs.

Des attaches pour capteurs sont connues dans l'état de la technique, par exemple des documents EP 3 473 499 A1, FR 2 987 400 A1, US 8 894119 B1, FR 2 986 483 A1, avec lesquelles des capteurs peuvent être montés, par exemple derrière l'enveloppe externe d'un véhicule. Les attaches sont conçues pour que le capteur puisse être agencé aussi près que possible de l'enveloppe externe du véhicule. Le capteur peut être un capteur radar, par exemple un capteur de type capteur radar à moyenne portée (capteur MRR) pour surveiller la zone avant ou arrière d'un véhicule pour des systèmes d'assistance à la conduite tels qu'un avertisseur de sortie de voie, un procédé pour la sortie assistée d'un véhicule d'un emplacement de stationnement, un assistant d'angle mort ou d'autres éléments similaires. De tels capteurs sont en particulier utilisés pour des applications de conduite autonome, sont relativement grands, avec des formes de boîtier souvent rectangulaires ou carrées de tailles comprises entre 5 × 5 cm et 10 cm × 10 cm ou plus, par exemple d'environ 6 cm × 9,5 cm, et possèdent une masse telle que, lorsque des chocs sur la structure de fixation ont lieu, des forces d'impulsion sont exercées sur un support de capteur. Grâce à sa fixation, la zone de réception ou de rayonnement du capteur peut être réglée de manière exacte et ne pas être influencée. Il est souhaitable qu'un écart d'alignement du capteur dans le support de capteur soit inférieur à 3° sur une durée de vie de plusieurs années.

Une fois installé, le capteur doit être déplacé aussi faiblement que possible hors de sa position d'installation afin de ne pas influencer les valeurs mesurées enregistrées ou reçues par le capteur. Premièrement, une construction suffisamment rigide de la fixation est nécessaire. Le capteur est monté, par exemple, avec un support de capteur à l'intérieur de l'enveloppe externe du véhicule. Des capteurs sont régulièrement agencés sur la surface intérieure des pare-chocs, ceux-ci étant maintenus dans le support de capteur à distance de la surface intérieure du pare-chocs et alignés au moyen du support de capteur dans une position définie d'alignement par rapport à l'axe longitudinal du véhicule. Ainsi, le capteur n'est pas positionné sur la surface intérieure du pare-chocs.

Les documents FR 2 987 400 A1 ou US 8 894 119 B1 divulguent un support de capteur selon le préambule de la revendication 1.

La nature des chocs auxquels le véhicule doit résister, et qui font partie des cahiers des charges s'imposant à tous les constructeurs, est décrite dans des normes connues de la profession.

Ces cahiers des charges envisagent quatre principales catégories d'impacts, à savoir
- Les chocs de type haute vitesse, qui correspondent à un impact frontal contre un obstacle rigide ou déformable. Pour un choc frontal, la vitesse du véhicule est d'au moins 56 km/h. Le véhicule doit alors être conçu avec un objectif de protection des occupants du véhicule.
- Les chocs de type assurance, à environ 15 km/h contre un mur fixe, tel que celui connu sous le nom de choc Danner ou encore AZT, ou à environ 10km/h contre une barrière déformable ou contre un poteau (RCAR bumper test, chocs poteau, norme IIHS), et qui sont traités avec un objectif de limitation des dégâts et des coûts de réparation associés.
- Les petits chocs, ou chocs de type parking (ECE42, USPART 581), à une vitesse d'environ 4 km/h au centre et 2.5km/h sur les coins, qui sont traités avec un objectif de non détérioration extérieure de la peau de pare-chocs.
- Les chocs piétons réglementaires (jambe, fémur) à environ 40 km/h qui sont traités de manière à respecter des critères bio-mécaniques dans le but de limiter les lésions.

En cas de choc de faible importance, tel qu'un choc parking ou un choc piéton, le support de capteur doit permettre d'amortir le choc de manière élastique sans détérioration ou déviation, afin de ne pas dégrader le fonctionnement du capteur, notamment en ce qui concerne son orientation.

Afin de vérifier la rigidité ou la stabilité de la fixation du capteur sur l'enveloppe externe, un type de test de choc peut être effectué, lequel correspond à un choc de faible importance, tel qu'un choc parking ou un choc piéton. Dans ce cas, une collision d'un projectile a lieu sur le capteur monté sur le support de capteur. Le test de choc peut être effectué, par exemple, avec une bille. Dans ce cas, l'impact est de préférence centré et perpendiculaire à la surface du capteur. Si le capteur avec un support de capteur est agencé sur la surface intérieure d'un pare-chocs, l'impact est quasiment orthogonal à la surface du pare-chocs. Lorsque le projectile frappe le capteur, celui-ci est dévié dans la direction du sens de projection. Dans ce cas, il est vérifié dans quelle mesure le capteur revient à sa position initiale après avoir été dévié par l'impact. En outre, il est vérifié si le support de capteur se détache de manière permanente ou irréversible de la surface intérieure de pare-chocs. Le support de capteur doit être conçu afin que, après la déviation, le capteur ne revienne à sa position initiale que si la variation de position ou la variation angulaire est la plus petite possible, et ne se détache pas de l'intérieur du pare-chocs. Dans l'état de la technique, par exemple, des dispositifs de support sont agencés derrière le capteur sur les composants du véhicule situés en arrière, lesquels supportent le capteur contre une déviation dans la direction du choc.

Dans des capteurs plus récents, en particulier des capteurs pour les systèmes d'assistance à la conduite, un support arrière du support de capteur n'est pas toujours possible car, par exemple, l'espace derrière le pare-chocs à la position souhaitée du capteur ne permet pas ou ne prévoit pas de structures de support. Par exemple, les capteurs destinés aux systèmes d'assistance à la conduite, tels que les capteurs radar à moyenne portée (capteur MRR), ne sont montés à distance que par un support de capteur situé sur la surface intérieure d'un pare-chocs. Une structure de support arrière ne peut être réalisée qu'à une distance maximale de 120 mm, de sorte que le capteur doit être fixé de manière pratiquement suspendue. Comme un tel capteur remplit une pluralité de fonctions pour une conduite autonome, il est relativement grand et généralement fixé par une pluralité de points de soudures sur la surface intérieure du pare-chocs. Lorsque le support de capteur et le pare-chocs sont fabriqués à partir de matériaux différents, en particulier des matériaux plastiques différents, les soudures sont moins résistantes aux chocs que des soudures de matériaux identiques. Le support de capteur peut par exemple se composer un matériau plus rigide, en particulier d'un autre matériau plastique, que le pare-chocs. Par conséquent, les soudures sont moins stables. Même un tel capteur monté doit passer avec succès le test de choc déjà décrit. Cela signifie que, après l'impact sur le capteur, celui-ci doit revenir à la position initiale. Par conséquent, le support de capteur doit offrir seul une stabilité suffisante ainsi qu'une fixation adéquate.

Le but de l'invention est donc de proposer un support de capteur qui surmonte les inconvénients susmentionnés.

Ce but est atteint par un support de capteur pour un véhicule, en particulier pour un agencement derrière un pare-chocs du véhicule, comprenant au moins une zone de réception pour recevoir un capteur et au moins une zone de fixation avec laquelle le support de capteur peut être fixé avec un élément supplémentaire, en particulier avec un pare-chocs, une zone de raccordement destinée à être raccordée par fixation à l'élément supplémentaire étant comprise sur au moins une partie de l'au moins une zone de fixation, dans lequel, sur au moins une zone de fixation, au moins une partie de suspension est agencée entre la zone de raccordement et la zone de réception. Par exemple, la au moins une partie de suspension a la fonction d'un amortisseur de chocs retournant en position initiale, c'est-à-dire de manière élastique, une fois l'énergie d'un choc absorbée.

Suivant d'autres caractéristiques optionnelles du support de capteur, prises seules ou en combinaison :
- l'au moins une partie de suspension est élastique ;
- par « résistant aux chocs », il faut comprendre une résistance aux chocs de faible importance, tel qu'un choc parking ou un choc piéton ;
- l'au moins une partie de suspension est résistante aux chocs et réversible en position ;
- l'au moins une partie de suspension est plus élastique que la zone de raccordement et que la zone de réception ;
- une pluralité de zones de fixation sont prévues dans le support de capteur, dans lequel au moins une zone de fixation forme au moins une languette comprenant la partie de suspension pour relier la zone de raccordement à la zone de réception ;
- l'au moins une partie de suspension et au moins une zone de fixation, en particulier la languette, sont formées en une seule pièce, la partie de suspension étant de préférence formée en tant qu'articulation à corps solide, en particulier en tant qu'un gaufrage de matériau et/ou un cintrage de matériau ;
- la partie de suspension présente différentes zones, une zone étant conçue pour compenser des déplacements longitudinaux, respectivement des déplacements transversaux, et une autre zone étant conçue pour compenser les rotations ;
- la partie de suspension est formée au moins partiellement avec une section transversale amincie, la section transversale présentant au moins partiellement une épaisseur de paroi qui est inférieure à une épaisseur de paroi dans la partie de suspension, en particulier les épaisseurs de paroi de la partie de suspension étant inférieures à une épaisseur de paroi de la section transversale dans la zone de l'au moins une zone de fixation ;
- l'au moins une partie de suspension s'étend sur toute la largeur de l'au moins une zone de fixation, en particulier sur toute la largeur de la languette, l'au moins une partie de suspension présentant de préférence une largeur inférieure, de préférence une largeur inférieure d'au moins le facteur 5, en particulier du facteur 8, par rapport à la longueur de l'au moins une zone de fixation ;
- la largeur de la zone de fixation, en particulier la largeur de la languette, est formée de manière amincie dans la zone de la partie de suspension ;
- l'au moins une partie de suspension est conçue pour absorber des forces de cisaillement, de préférence élastiquement ;
- les forces de cisaillement agissent sur le support de capteur à la suite d'une charge prédéfinie sur un capteur inséré dans la zone de réception, la charge agissant perpendiculairement à la face frontale du capteur, de préférence la charge prédéfinie correspondant à une charge résultant d'un choc parking ou d'un choc piéton ;
- la zone de réception est formée en une seule pièce avec l'au moins une zone de fixation ;
- la zone de réception comporte une chambre de réception ouverte sur au moins un côté, l'au moins une zone de fixation étant agencée sur un côté ouvert de la chambre de réception et formant, au moyen de la partie de suspension, une liaison de la zone de raccordement avec la zone de réception, et la chambre de réception ne chevauchant pas l'au moins une zone de fixation en particulier dans une direction de capteur ;
- la liaison de la zone de raccordement avec la zone de réception est résistante aux chocs et réversible en position ;
- la liaison de la zone de raccordement avec la zone de réception est élastique ;
- la zone de réception a une forme sensiblement en forme de cuvette, et l'au moins une zone de fixation est reliée à celle-ci dans une zone de bord supérieur de la zone de réception ;
- la zone de raccordement est conçue en tant que surface surélevée dans la zone de fixation, la surface surélevée étant conformée sous forme de surface de soudage, en particulier de patin de soudage. La présence de la surface surélevée permet d'assurer que les mouvements de la partie de suspension lors d'un choc ne dégradent pas la fixation par soudage ;
- la surface surélevée sert de surface de soudage ;
- le support de capteur comprend au moins trois, en particulier quatre zones de fixation, au moins deux zones de fixation, en particulier trois zones de fixation, présentant une partie de suspension, les parties de suspension étant agencées à distance de la zone de réception de sorte qu'une activité de capteur n'est pas influencée ;
- le support de capteur est constitué d'un élastomère chargé en fibres de verre, en particulier à partir de PP/EPDM, de préférence avec une teneur en fibres de verre d'au moins 5 %, de préférence le support de capteur présentant principalement une rigidité supérieure à celle de l'élément supplémentaire, en particulier à celle du pare-chocs, sur lequel le support de capteur peut être fixé ;
- le support de capteur est prévu pour être fabriqué par un procédé de moulage par injection ;
- la au moins une zone de réception est configurée pour recevoir au moins un capteur ;
- la au moins une zone de réception est configurée pour recevoir un unique capteur ;
- la au moins une zone de réception est configurée pour recevoir une pluralité de capteurs.

Ce but est également atteint par un agencement d'un support de capteur du type susmentionné sur un pare-chocs, dans lequel le support de capteur est fixé, en particulier soudé, à l'au moins une zone de raccordement sur une surface intérieure de pare-chocs, le capteur étant reçu dans le support de capteur et étant agencé entre la surface intérieure de pare-chocs et le support du capteur et étant fixé au moyen de parties de suspension par rapport à la surface intérieure de pare-chocs.

Suivant d'autres caractéristiques optionnelles de l'agencement, prises seules ou en combinaison :
- les parties de suspension sont élastiques ;
- par « résistant aux chocs », il faut comprendre une résistance aux chocs de faible importance, tel qu'un choc parking ou un choc piéton ;
- les parties de suspension sont résistantes aux chocs et réversibles en position ;
- l'agencement est résistant aux chocs.

### DIVULGATION DE L'INVENTION

L'invention concerne un support de capteur pour un véhicule, destiné en particulier à être agencé derrière un pare-chocs du véhicule. Celui-ci comprend au moins une zone de réception pour recevoir un capteur et au moins une zone de fixation avec laquelle le support de capteur peut être fixé avec un élément supplémentaire, en particulier avec un pare-chocs. Au moins une partie de l'au moins une zone de fixation comprend une zone de raccordement pour le raccordement par fixation à l'élément supplémentaire.

Il est proposé qu'au moins une partie de suspension résistante aux chocs et réversible en position soit agencée entre la zone de raccordement et la zone de réception sur au moins une zone de fixation. Le capteur est aligné grâce au support de capteur dans une position d'alignement définie par rapport à l'axe du véhicule et ne touche généralement pas l'élément supplémentaire auquel le support de capteur peut être fixé. Grâce à l'au moins une partie de suspension, le capteur qui est agencé dans la zone de réception peut revenir automatiquement à la position initiale lors d'une déviation de la position de repos, par exemple, lors d'une impulsion sur l'élément supplémentaire, par exemple lors d'un choc sur le pare-chocs, grâce au support de capteur. Ceci est réalisé en particulier par le fait que la partie de suspension est d'une part élastique et d'autre part réversible. Dans ce cas, la partie de suspension peut être étirée, celle-ci revenant de préférence toute seule vers la position initiale. Par exemple, il est possible que la partie de suspension soit constituée d'un matériau à mémoire de forme. De préférence, la partie de suspension est formée à partir de matériau plastique.

Dans un test de choc tel que décrit ci-dessus, le capteur est ciblé par un projectile, tel qu'une bille, perpendiculairement au capteur. À la suite de l'impact, le capteur, qui est monté dans le capteur de support, est dévié de la position de repos. Se produit alors une déformation du pare-chocs auquel le support de capteur est de préférence fixé, ainsi qu'une déformation du support de capteur lui-même. Le support de capteur est dévié de sorte que des forces de cisaillement peuvent se produire dans au moins une zone de raccordement. Si ces forces dépassent une limite, le support de capteur peut se détacher de manière permanente ou irréversible du pare-chocs. Pour éviter cela, la force générée par l'impact peut être absorbée dans la partie de suspension. De préférence, la quasi-totalité de la force dans la partie de suspension est compensée par la déformation de la partie de suspension. En raison de la déformation, le capteur est d'abord dévié, puis rappelé à l'état initial. Ainsi, d'une part, la zone de raccordement peut être dégagée et, d'autre part, un positionnement fixe et une restauration de la position définie du capteur peuvent être assurés. Cela permet notamment de maintenir les tolérances autorisées d'alignement du capteur dans la position de repos. Par exemple, la tolérance maximale autorisée peut être de 3°. Cela peut correspondre à une tolérance maximale autorisée pour une période de cinq ans. À cet égard, la partie de suspension du support de capteur permet d'obtenir un rapport optimisé d'alignement de position, de stabilité et de flexibilité au regard d'une application d'impulsion sur le capteur.

Le support de capteur est particulièrement adapté aux capteurs qui ont des dimensions relativement grandes et un poids élevé. Ainsi, le capteur peut avoir une forme rectangulaire ou carrée par exemple, les dimensions des bords latéraux pouvant être comprises de préférence entre 6 et 9 cm. Par exemple, un bord latéral peut avoir une dimension de 6 cm, un autre bord latéral pouvant être de 9 cm. L'épaisseur du capteur peut être en particulier comprise entre 1 cm et 5 cm. De préférence, le capteur a une épaisseur d'environ 2 cm et un poids compris entre 50 g (grammes) et 150 g, en particulier entre 80 g et 90 g.

La partie de suspension est de préférence agencée dans la zone de fixation entre la zone de raccordement et la zone de réception. Dans ce cas, les dimensions de la partie de suspension sont relativement petites, au moins dans une direction spatiale par rapport à la dimension globale de la zone de fixation, de sorte que la partie de suspension nécessite le moins d'espace d'installation possible.

La partie de suspension peut être formée, par exemple, en tant que structure périphérique qui s'étend autour de la zone de réception. Dans ce cas, la partie de suspension peut être formée comme une sorte de rondelle ressort ou à la manière d'une suspension de trampoline. Dans un mode de réalisation, par exemple, une partie de suspension entoure complètement la zone périphérique de la zone de réception. De même, la partie de suspension ne peut être agencée que dans des zones partielles de la périphérie de la zone de réception. Ainsi, un positionnement en porte-à-faux défini du capteur peut être assuré grâce au support de capteur sur un élément de l'enveloppe externe du véhicule. En outre, dans un mode de réalisation, la zone de fixation peut être agencée de manière périphérique autour de la partie de suspension. Dans ce cas, la zone de fixation peut avoir toute géométrie périphérique souhaitée.

De préférence, la partie de suspension est agencée à proximité de la zone de réception, de sorte que les forces agissant sur le capteur peuvent être engagées directement dans la partie de suspension et y être reçues ou transformées. De préférence, la partie de suspension a une petite dimension transversale Q. De préférence, la dimension transversale Q de la partie de suspension est inférieure à celle de la zone de réception, vue en section longitudinale ou en section transversale à travers le support de capteur. Ainsi, on peut garantir en particulier que la partie de suspension ne se situe pas dans l'angle d'émission du capteur et n'influence donc pas le capteur lors de la réception ou de l'émission de signaux. La partie de suspension est donc de préférence peu encombrante et/ou légère.

La partie de suspension peut provoquer à la fois une variation de longueur et une variation de flexion de la zone de fixation, et ainsi agir de manière élastique à la fois longitudinalement et transversalement dans la direction de la zone de fixation.

Dans un mode de réalisation préféré, une pluralité de zones de fixation peut être prévue, au moins une zone de fixation formant au moins une languette comprenant la partie de suspension pour relier la zone de fixation à la zone de réception. De préférence, deux zones de fixation ou plus sont agencées sur la périphérie de la zone de réception. Les zones de fixation peuvent être identiques ou différentes. Au moins une zone de fixation ne peut pas avoir une partie de suspension, de sorte qu'un positionnement défini du support de capteur sur un élément supplémentaire ou un raccordement par fiche non élastique ou un raccordement par câble peut être permis. Les zones de fixation peuvent chacune être conçues comme une sorte de languette. Dans ce cas, la partie de suspension peut être formée de manière sensiblement identique au niveau de différentes zones de fixation. Si une pluralité de languettes sont prévues, lesquelles ont chacune au moins une partie de suspension, la partie de suspension est de préférence agencée sensiblement au moins par endroits autour de la périphérie de la zone de réception. Dans ce cas, le tracé de la partie de suspension ne doit pas nécessairement être complètement ajusté au tracé de la périphérie de la zone de réception. Seule la situation dans laquelle une force agissant sur la zone de réception peut être engagée directement dans la partie de suspension, de sorte que la zone de raccordement est soulagée, est avantageuse. Il est envisageable de prévoir au moins deux parties de suspension en série et/ou parallèles les unes aux autres dans chaque zone de fixation afin de rendre l'effet de suspension ajustable et adaptable à la charge respective. Il est en outre envisageable de procéder à une adaptation à la charge par le choix des épaisseurs de paroi et/ou des dimensions transversales.

Dans un mode de réalisation préféré, l'au moins une partie de suspension et l'au moins une zone de fixation, en particulier la languette, sont formées en une seule pièce, la partie de suspension étant de préférence formée en tant qu'articulation à corps solide, en particulier en tant qu'un gaufrage de matériau et/ou un cintrage de matériau. La partie de suspension est de préférence formée dans une direction spatiale X, laquelle s'étend de manière opposée à la direction du capteur S qui définit la direction de la sensibilité du capteur. Le plan perpendiculaire au plan normal formé par la direction spatiale X et la direction du capteur S forme de préférence le plan dans lequel l'au moins une zone de fixation est formée et dans lequel la zone de réception est située. Grâce à cela, il peut être assuré que les dimensions géométriques de la partie de suspension n'affectent pas l'activité du capteur. De préférence, la partie de suspension est formée en tant que gaufrage de matériau ou cintrage de matériau. Grâce à la conformation de la partie de suspension en tant qu'articulation à corps solide au sens d'une suspension par corps solide, en particulier formée en une seule pièce et à partir du même matériau que la zone de fixation, celle-ci n'agit pas au sens d'une véritable articulation au sens d'une paire cinématique, mais est plutôt basé sur le principe de l'élastostatique (élasticité). La fonction de suspension peut être obtenue grâce à une zone dotée d'une rigidité en flexion amoindrie relativement à deux zones avoisinantes dotées d'une rigidité en flexion plus élevée. La rigidité en flexion amoindrie peut de préférence être obtenue par une diminution locale de la section sous la forme d'une charnière à film, mais peut également être combinée ou bien uniquement obtenue par un gaufrage de matériau et/ou par un cintrage de matériau. L'utilisation d'une partie dotée d'un matériau autre ou modifié doté de propriétés élastiques en flexion peut également être éventuellement envisagée.

Dans un mode de réalisation préféré, la partie de suspension peut avoir différentes zones. Dans ce cas, une zone peut être conçue pour compenser des déplacements longitudinaux ou des déplacements transversaux. Une autre zone peut être conçue pour compenser les rotations. La partie de suspension a de préférence des propriétés élastiques différentes dans les au moins deux zones. Celles-ci peuvent être formées, par exemple, par combinaison de gaufrages de matériau ou de cintrage de matériau formés différemment. Il est en outre envisageable de réaliser les différentes propriétés élastiques en combinant un gaufrage de matériau et une articulation à corps solide sous la forme d'une charnière à film dotée d'une diminution locale de section. Dans ce cas, le gaufrage de matériau par exemple peut avoir une première zone et la charnière à film une seconde zone. Dans un tel mode de réalisation, le gaufrage de matériau peut être conçu pour compenser les déplacements longitudinaux ou transversaux et permettre la rotation de la charnière à film. Au contraire d'une charnière à film usuelle dotée d'un rétrécissement à section extrêmement mince, il suffit, pour la réalisation de la partie de suspension sous la forme d'une articulation à corps solide à charnière à film, d'une légère diminution de section, laquelle comporte une propriété d'amortissement des chocs pour l'absorption de chocs et une propriété d'auto-rappel en position dans une position de sortie initiale.

De préférence, un déplacement de la zone de fixation peut avoir lieu par rapport à la zone de réception grâce à la partie de suspension. Ceci peut par exemple être réalisé grâce au fait que la partie de suspension peut effectuer un déplacement longitudinal, respectivement un déplacement transversal. Un déplacement longitudinal ou un déplacement transversal de la partie de suspension peut de préférence être obtenu grâce au fait que la partie de suspension est formée en tant que gaufrage de matériau ou que cintrage de matériau.

Dans un mode de réalisation préféré, la partie de suspension peut être au moins partiellement formée avec une section transversale amincie par rapport à la zone de fixation, la section transversale dans la partie de suspension ayant au moins partiellement une épaisseur de paroi minimale t1, qui est inférieure à une épaisseur supplémentaire de paroi t2 dans la partie de suspension. En particulier, les épaisseurs de paroi t1, t2 peuvent être inférieures à une épaisseur de paroi minimale t3 dans une section transversale supplémentaire dans la zone de l'au moins une zone de fixation. De préférence, la zone de fixation est fabriquée en une seule pièce avec la partie de suspension en tant que composant. Le composant peut être, par exemple, un composant moulé par injection. En particulier, le support de capteur complet peut être fabriqué en tant que composant moulé par injection et, en particulier, être formé en une seule pièce. Ainsi, le support de capteur peut être fabriqué sans arête vive et sans contre-dépouille. Dans la zone de la partie de suspension, le matériau peut comporter au moins un cintrage de matériau ou un gaufrage de matériau et/ou une réalisation en tant que charnière à film auto-réversible au sens d'une articulation à corps solide, laquelle est formée par une déformabilité élastique du matériau à l'emplacement de la partie de suspension. De préférence, le matériau dans la partie de suspension peut être élastique et cintré de manière auto-réversible au moins dans une direction approximativement perpendiculaire à X. Avantageusement, le matériau dans la partie de suspension fait saillie sensiblement d'un côté à partir du plan de la languette. De préférence, la partie de suspension est formée par une déformation du matériau dans une direction opposée à la direction d'émission S du capteur. Grâce à cela, il peut être assuré que la partie de suspension n'influence pas l'activité du capteur.

La partie de suspension dans la zone de fixation peut être formée en section transversale, par exemple alternativement avec les épaisseurs de paroi t3, t2, t1, t2 et t3. Il est avantageux que dans la zone de fixation, les épaisseurs de paroi t1 soient formées de manière inférieure à t2 et t1, t2 de manière inférieure à l'épaisseur de paroi t3. En particulier, les épaisseurs de paroi t1 et t2 sont agencées dans une zone de bourrelet sensiblement en forme de U de la partie de suspension, par exemple sous la forme d'une partie de gorge transversale. Grâce à cela, une déformation causée par un impact ou une action similaire sur le capteur, principalement dans la partie de suspension par une déformation de la zone de gorge transversale élastique, peut être compensée.

Les dimensions des épaisseurs de paroi peuvent de préférence être comprises entre 1,0 mm et 3,0 mm. Ainsi, l'épaisseur de paroi typique t3 peut être de 2,7 mm dans la zone de fixation. En particulier, l'épaisseur de paroi minimale t1 dans la zone de la partie de suspension peut être de 1,2 mm. De manière davantage préférée, l'épaisseur de paroi t2 peut être comprise entre 1,5 mm et 2,5 mm, en particulier être de 2 mm. Dans le cas d'un cintrage de matériau, des rayons compris entre 0,5 et 5,0 mm peuvent être formés. Il en résulte par exemple un élément de gorge transversale en forme de U élastique qui a dans la zone centrale, par exemple sur un axe de symétrie, le point le plus mince avec une épaisseur de paroi t1. La partie de courbure en forme de U peut avoir, par exemple, un rayon de courbure extérieur de 5 mm et le passage à la partie droite de la zone de fixation peut avoir un rayon de courbure extérieur de 2,5 mm et un rayon de courbure intérieur de 0,5 mm. Sur ce passage, il peut y avoir une courbure à 75° de la partie droite par rapport à la paroi de départ de la partie en forme de U.

Dans un mode de réalisation préféré, l'au moins une partie de suspension peut s'étendre sur toute la largeur de l'au moins une zone de fixation, en particulier sur toute la largeur de la languette. De préférence, l'au moins une partie de suspension peut avoir une largeur inférieure, de préférence une largeur inférieure d'au moins un facteur cinq, en particulier d'un facteur huit, par rapport à la longueur de l'au moins une zone de fixation. La section transversale Q de la partie de suspension doit être choisie dans une dimension petite pour ne pas influer inutilement sur la taille du support de capteur. Si une pluralité de languettes sont présentes, chacune ayant une partie de suspension, la partie de suspension de chaque languette s'étend de préférence sur toute la largeur de la languette. Grâce à cela, il est assuré qu'une déformation peut se produire principalement dans la partie de suspension. La partie de suspension peut permettre à la fois une variation de longueur et une variation angulaire de la zone de fixation.

Dans un mode de réalisation préféré, la largeur de la zone de fixation peut être amincie, en particulier la largeur de la languette dans la zone de la partie de suspension. En d'autres termes, la partie de suspension est formée avec une longueur plus courte que la largeur de la zone de fixation. Cela permet d'économiser du matériau sans que la surface de la fixation soit réduite dans la zone de fixation, en particulier la surface de raccordement. Par conséquent, la taille de zone de raccordement peut être formée indépendamment de la taille de la partie de suspension.

Dans un mode de réalisation préféré, l'au moins une partie de suspension peut être conçue pour absorber des forces de cisaillement. Le flux de force peut être influencé en particulier par le choix des épaisseurs de paroi dans la zone de la partie de suspension, en particulier par rapport à l'épaisseur de paroi de la zone de fixation. Ainsi, par exemple, différentes épaisseurs de paroi t1 et t2 peuvent être présentes dans la zone de la partie de suspension, chacune étant conçue pour être inférieure à une épaisseur de paroi t3 dans la zone de la zone de fixation.

Dans un mode de réalisation préféré, les forces de cisaillement peuvent agir sur le support de capteur en raison d'une charge prédéfinie sur un capteur inséré dans la zone de réception. Dans ce cas, la charge peut agir perpendiculairement ou angulairement par rapport à la face frontale du capteur.

Dans un mode de réalisation préféré, la zone de réception peut être formée en une seule pièce avec l'au moins une zone de fixation. En particulier, le support de capteur peut être complètement fabriqué à partir d'un composant. Par conséquent, la partie de suspension, la zone de fixation ainsi que la zone de réception peuvent être constituées du même matériau. Les différentes fonctions, en particulier pour la suppression des charges, peuvent donc être causées par différentes épaisseurs de parois ou différentes dimensions géométriques. En particulier, le support de capteur peut être constitué de matériau plastique et peut être fabriqué par un procédé de moulage par injection.

Dans un mode de réalisation préféré, la zone de réception peut comporter une chambre de réception ouverte sur au moins un côté pour recevoir le capteur, l'au moins une zone de fixation étant agencée sur un côté ouvert de la chambre de réception et formant, au moyen de la partie de suspension, une liaison résistante aux chocs et réversible en position de la zone de raccordement avec la zone de réception. En particulier, la chambre de réception ne peut pas chevaucher l'au moins une zone de fixation dans une direction de capteur S. Un capteur peut ainsi être inséré dans la chambre ouverte sur un côté. De préférence, la zone de réception peut être ouverte dans la zone du fond de la chambre fermée, par exemple grâce à une sorte de capot et/ou de charnière. Par exemple, avec le capot ouvert, le capteur peut être inséré dans la chambre de réception via le côté ouvert à travers le capot et maintenu du côté ouvert au moyen de saillies et de structures de verrouillage. Pour cela, des butées ou des éléments similaires sont agencés de préférence sur le côté ouvert de la chambre de réception de sorte que le capteur ne tombe pas de la chambre de réception par le côté ouvert. Après insertion du capteur dans la zone de réception, le capot peut être fermé, par exemple par une fermeture à clip, le capteur pouvant ainsi être maintenu de manière facilement remplaçable dans la zone de réception. De préférence, le capteur est monté serré dans la zone de réception, de sorte qu'il ne peut pas glisser dans la zone de réception. De préférence, la zone de fixation est agencée sur le côté ouvert de la chambre de réception de sorte que la chambre de réception ne fait sensiblement saillie que d'un seul côté par rapport au plan de la zone de fixation. Cela permet d'assurer que le capteur peut être agencé aussi près que possible mais à distance de la surface intérieure de l'enveloppe externe du véhicule. En particulier, le capteur peut ainsi être agencé très près d'une surface intérieure du pare-chocs. Ceci est particulièrement important pour obtenir un agencement compact, peu encombrant et un alignement précis, et pour ne pas influencer l'activité du capteur.

Dans un mode de réalisation préféré, la zone de réception peut être sensiblement en forme de cuvette, et l'au moins une zone de fixation peut être reliée à celle-ci dans une zone de bord supérieur de la zone de réception. Cela peut également assurer que le capteur est agencé aussi près que possible de la surface intérieure de l'enveloppe externe du véhicule.

Dans un mode de réalisation préféré, la zone de raccordement peut être formée en tant que surface surélevée dans la zone de fixation. Dans ce cas, la surface surélevée peut être formée en tant que surface de soudage, en particulier en tant que patin de soudage pour le raccordement à une surface de l'élément supplémentaire, par exemple pour le soudage par matériau plastique avec une surface intérieure d'un pare-chocs. En d'autres termes, la surface surélevée sert alors de surface de soudage. La zone de réception peut être montée résistante aux chocs et de manière réversible en position par rapport à la zone de raccordement au moyen de la partie de suspension. La zone de raccordement est de préférence conçue en tant qu'élévation par rapport au plan de la zone de fixation, laquelle fait saillie au-delà de la zone de fixation du côté opposé par rapport au cintrage de matériau ou au gaufrage de matériau destiné à former la partie de suspension. Ainsi, l'espace disponible pour la formation de la partie de suspension n'est pas influencé par la hauteur de la zone de raccordement. Au contraire, la partie de suspension peut être formée arbitrairement dans la direction, par exemple, de la chambre de réception ouverte d'un côté ou dans la direction de la zone de réception en forme de cuvette.

Dans un mode de réalisation préféré, au moins trois, en particulier quatre zones de fixation peuvent être incluses. Au moins deux zones de fixation, en particulier trois zones de fixation, peuvent avoir une partie de suspension, les parties de suspension étant agencées à distance de la zone de réception afin que l'activité du capteur ne soit pas influencée. De préférence, au moins une zone de fixation peut ne pas comporter de partie de suspension. Par conséquent, dans un mode de réalisation avec un total de quatre zones de fixation, par exemple, trois zones de fixation peuvent chacune avoir au moins une partie de suspension, tandis qu'une zone de fixation ne comporte aucune partie de suspension. De préférence, les zones de fixation sont agencées uniformément réparties autour de la zone de réception, de sorte que les forces peuvent être éliminées de manière uniforme sur toute la périphérie de la zone de réception. Dans ce cas, par exemple, une zone de fixation peut comprendre un raccordement par câble ou par fiche, cette dernière étant avantageusement formée de manière non élastique et/ou sans partie de suspension, afin d'éviter une rupture du câble ou une rupture du raccordement par fiche au cours de la durée de vie. Cela permet en particulier d'assurer que les tolérances maximales autorisées pour une déviation du capteur inférieure à 3° sont respectées.

Dans un mode de réalisation préféré, le support de capteur peut être constitué d'un élastomère chargé en fibres de verre, en particulier à partir de PP/EPDM - en d'autres termes polypropylène/éthylène-propylène-diène monomère -, de préférence avec une teneur en fibres de verre d'au moins 5 %. En particulier, le support de capteur peut être constitué d'un matériau PP GF5, c'est-à-dire d'un matériau polypropylène chargé de 5,0 % de fibres de verre de renforcement. Ce matériau peut agir en absorbant le rayonnement du capteur et peut fournir une grande rigidité pour l'orientation du capteur. De préférence, le support de capteur peut principalement présenter une rigidité supérieure à celle de l'élément supplémentaire, en particulier du pare-chocs, auquel le support de capteur peut être fixé. En particulier, grâce à la charge en fibres de verre, le support de capteur peut être rendu plus rigide qu'un élément sur lequel le support de capteur est monté. Par exemple, le support de capteur peut ainsi être rendu plus rigide qu'un pare-chocs. En particulier, une élasticité différente entre le pare-chocs et le support de capteur peut entraîner des forces de cisaillement importantes dans la zone des zones de raccordement dans la zone de fixation. Au moins une partie de suspension permet d'absorber ces forces de cisaillement, les zones de raccordement étant ainsi soulagées. Par exemple, cela permet d'empêcher le support de capteur de se détacher du pare-chocs lors du test de choc susmentionné.

Dans un mode de réalisation préféré, le support de capteur peut être prévu pour être fabriqué par un procédé de moulage par injection. La forme du support de capteur est ainsi facile à mettre en œuvre. Cela permet en particulier de réaliser différentes configurations géométriques de la partie de suspension. Lors d'un processus par un moulage par injection, le support de capteur peut être doté d'éléments supplémentaires, conçus par exemple pour optimiser le comportement d'émission et de réception et pour éviter les réflexions radar indésirables sur le support de capteur.

L'invention concerne en outre un agencement d'un support de capteur sur un pare-chocs. Il est en outre envisageable que le support de capteur puisse être agencé sur d'autres surfaces intérieures de composants de l'enveloppe externe d'un véhicule.

Il est proposé que le support de capteur soit fixé, en particulier soudé, à l'au moins une zone de raccordement sur une surface intérieure de pare-chocs, le capteur étant reçu dans le support de capteur et agencé entre la surface intérieure de pare-chocs et le support de capteur. Au moyen des parties de suspension, le capteur est fixé résistant aux chocs et de manière réversible en position par rapport à la surface intérieure du pare-chocs. Dans une telle position, par exemple, un capteur pour des systèmes d'assistance à la conduite peut être agencé, tel qu'un capteur radar à moyenne portée (capteur MRR). Pour l'agencement d'un support de capteur sur un pare-chocs, les mêmes avantages et conceptions s'appliquent que ceux décrits précédemment en ce qui concerne le support de capteur.

Le support de capteur décrit ainsi que l'agencement décrit d'un support de capteur sur un pare-chocs permet le positionnement d'un capteur sur une surface intérieure de l'enveloppe externe du véhicule. D'une part, le support de capteur a une rigidité suffisante pour aligner le capteur dans la position souhaitée par rapport à l'axe longitudinal du véhicule. D'autre part, le positionnement est conçu pour être suffisamment élastique afin d'empêcher tout arrachement du support de capteur depuis la surface intérieure lorsqu'une application d'impulsion se produit sur le capteur.

### Brève description des figures

D'autres avantages apparaissent dans les dessins et les descriptions des dessins présents. Dans les dessins, des modes de réalisation de l'invention sont représentés. Les dessins, la description et les revendications contiennent de nombreuses caractéristiques combinées. L'homme du métier considérera aussi opportunément les caractéristiques individuellement et les combinera en combinaisons complémentaires significatives.

L'invention sera mieux comprise à la lecture de la description qui va suivre donnée uniquement à titre d'exemple et faite en se référant aux dessins annexés dans lesquels :
- la figure 1 représente un mode de réalisation d'un support de capteur selon l'invention en vue en plan ;
- la figure 2 représente une vue en plan sur le mode de réalisation de la figure 1 depuis un côté opposé ;
- la figure 3 représente une autre représentation isométrique du mode de réalisation de la figure 1 ;
- la figure 4 représente une autre représentation isométrique du mode de réalisation de la figure 1 ;
- la figure 5 représente un mode de réalisation d'une partie de suspension dans une section transversale ;
- la figure 6 représente un mode de réalisation d'un agencement d'un support de capteur sur une surface intérieure de pare-chocs dans une section transversale ;
- la figure 7 représente une vue en plan schématique d'un mode de réalisation supplémentaire d'un support de capteur selon l'invention.

### Description détaillée

Sur les figures, les composants identiques ou similaires sont numérotés avec les mêmes numéros de référence.

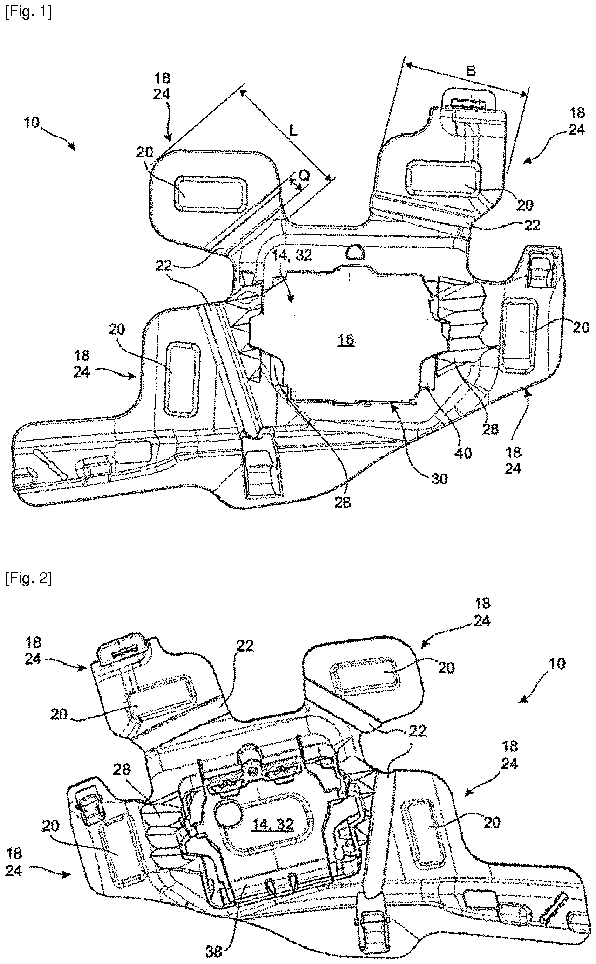

La figure 1 montre un mode de réalisation d'un support de capteur 10 dans une vue en plan. Le support de capteur 10 a une zone de réception 14 au centre dans laquelle au moins un capteur 16 peut être reçu, par exemple un capteur 16, dans un exemple alternatif une pluralité de capteurs. Autour de la périphérie de la zone de réception 14, quatre languettes 24 sont agencées. Chacune de ces languettes 24 forme une zone de fixation 18. Les zones de fixation 18 ont chacune une géométrie différente. Chacune des zones de fixation 18 a une zone de raccordement 20 qui, dans ce mode de réalisation, a une géométrie sensiblement rectangulaire. Dans ce cas, la géométrie de la zone de raccordement 20 est indépendante de la géométrie de la languette 24 ou de la zone de fixation 18. Trois des quatre zones de fixation 18 ont une partie de suspension 22. La partie de suspension 22 est agencée dans chaque cas sur la languette 24 respective. Chaque partie de suspension 22 est située entre une zone de raccordement 20 et la zone de réception 14. La languette 24 à droite sur l'illustration ne comporte aucune partie de suspension 22, car une liaison par fiche pour le capteur est menée dans le cas présent, un comportement élastique de la zone de fixation 18 étant de préférence indésirable pour éviter la rupture du câble ou le détachement de la fiche. Dans un autre mode de réalisation (non représenté), on peut également apposer une partie de suspension 22 à cette languette 24. Malgré une partie de suspension 22, une rigidité suffisante peut également être obtenue au niveau de cette languette. De plus, on peut s'assurer, par exemple, que le support de capteur 10 peut fixer le capteur 16 de manière fixe à une position souhaitée, par exemple sur une surface intérieure d'un pare-chocs (non représenté). Si une partie de suspension 22 était également agencée sur cette languette 24, il y aurait éventuellement un positionnement non défini du capteur 16 par rapport au pare-chocs. Au contraire, cette languette 24 présente une surface structurée 28 qui empêche la réflexion radar dans la zone du support de capteur 10. Les zones de raccordement 20 et les parties de suspension 22 sont suffisamment éloignées du capteur 16 pour ne pas influencer une surface active du capteur, telle qu'une sonotrode ou une antenne du capteur 16. Par conséquent, l'activité du capteur n'est pas influencée par le support de capteur 10.

Dans la figure 2 est représenté le support de capteur 10 de la figure 1. L'illustration montre une vue du côté opposé par rapport à la figure 1. Dans ce cas, on peut voir que la zone de réception 14 est formée en tant que chambre de réception 32. Alors que sur la figure 1, le côté ouvert 34 de la chambre de réception 32 peut être vu, la figure 2 montre un capot 38 dans la zone inférieure de la chambre de réception 32. Le capot 38 peut être rabattu de sorte que le capteur 16 peut être inséré à partir de la face inférieure de la chambre de réception 32 dans la zone de réception 14. Au niveau du côté ouvert 34, des saillies 40 sont agencées sur la chambre de réception 32, de sorte que le capteur 16 est serré sur le côté ouvert 34 dans la chambre de réception 32. Après la fermeture du capot 38, le capteur 16 est fixé de manière immobile dans la zone de réception 14 et est aligné en position.

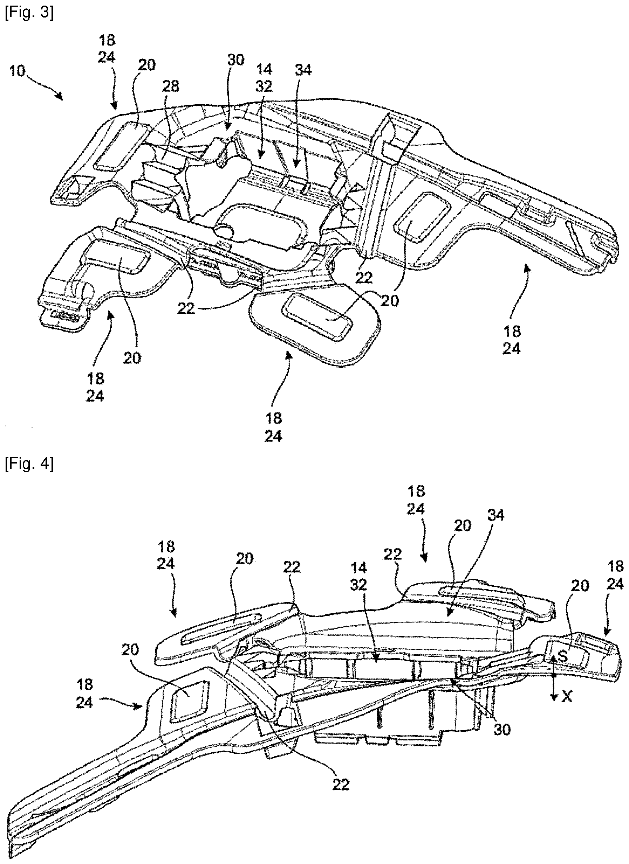

Une autre vue du support de capteur 10 du mode de réalisation de la figure 1 est illustrée à la figure 3. Dans ce cas, le support de capteur 10 est représenté sans capteur 16 inséré. Sur la représentation isométrique, on peut voir que les zones de raccordement 20 sont formées dans la zone de fixation 18 en tant que zones de surface surélevées. Considérées dans cette vue, les zones de raccordement 20 sont formées élevées vers le haut par rapport au plan de la zone de fixation 18. D'autre part, la zone de réception 14 est conçue en tant que chambre de réception 32 qui fait saillie du côté opposé par rapport au plan de la zone de fixation 18. Cela permet d'assurer que le support de capteur 10 peut être monté aussi près que possible d'une surface intérieure via les zones de raccordement 20, de sorte que l'activité du capteur n'est pas influencée par la surface intérieure, par exemple la surface intérieure d'un pare-chocs. En faisant saillie à partir de la chambre de réception 32 dans la direction opposée, n'importe quel capteur plus grand peut être logé dans le support de capteur 10, car la taille du capteur 16 n'influence pas la distance du capteur 16 à la surface intérieure.

La figure 4 montre une vue isométrique supplémentaire du mode de réalisation de la figure 1. Le capteur 16 n'est pas représenté dans cette illustration. On voit que les zones de fixation 18 se situent dans un plan incurvé par rapport à la zone de réception 18. Cela permet d'adapter le support de capteur 10 à différentes surfaces intérieures de composants. Cela permet de garantir que, pour des surfaces intérieures cintrées différemment, le capteur 16 peut être agencé aussi près que possible ou aussi près que nécessaire de la surface intérieure.

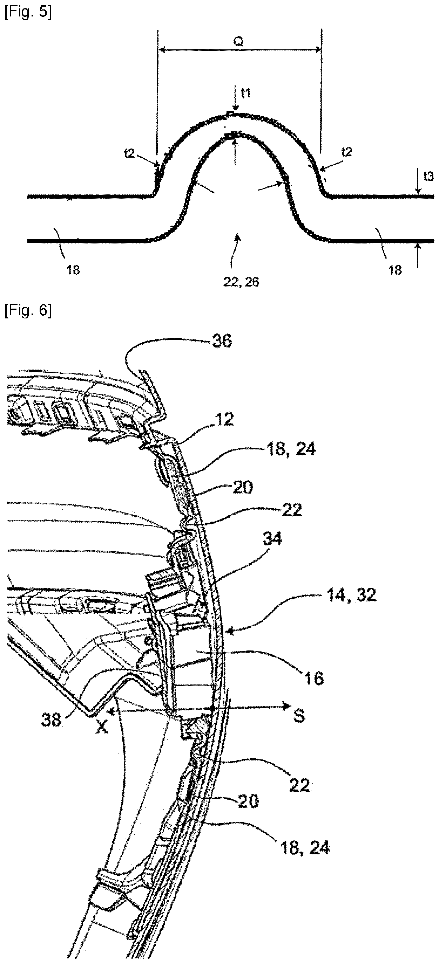

Une section transversale d'un mode de réalisation possible d'une partie de suspension 22 est illustrée sur la figure 5. La partie de suspension 22 est ici représentée en tant que gaufrage de matériau 26 ou que cintrage de matériau. La partie de suspension 22 est partiellement formée avec une section transversale amincie. La partie de suspension 22 présente, dans la zone centrale, une épaisseur de paroi t1 inférieure aux épaisseurs de paroi t2 dans la zone latérale de la partie de suspension 22. Les deux épaisseurs de paroi t1, t2 sont toutes deux inférieures à l'épaisseur de paroi t3 qui se trouve en section transversale dans la zone de la zone de fixation 18. Cela permet d'obtenir en particulier que la zone recouvrant la largeur Q serve en tant que partie de suspension 22, car cette zone est conçue pour être plus élastique que les parties adjacentes de la zone de fixation. Grâce à cela, un déplacement relatif entre la zone de réception 14 et la zone de fixation 18 peut avoir lieu. Une telle partie de suspension 22 peut, par exemple, permettre un déplacement longitudinal ou un déplacement transversal de la partie de suspension 22 en tant que telle, car la partie de suspension comporte la section transversale la plus mince dans la zone centrale supérieure.

Il est également envisageable de former une épaisseur de paroi t1 supérieure à l'épaisseur de paroi t2, de sorte qu'une charnière à film en forme d'articulation à corps solide est formée. Une telle charnière à film (non représentée) peut permettre une rotation angulaire dans la partie de suspension 22. Cela permet de réaliser une rotation entre la zone de fixation 18 et la zone de réception 14.

Il est en outre envisageable qu'une pluralité de gaufrages de matériau 26 représentés en série les uns à côté des autres ou parallèlement les uns aux autres soit agencée pour former une partie de suspension 22 continue avec des propriétés de suspension réglables. Dans un autre mode de réalisation, un gaufrage de matériau 26 et une charnière à film au sens d'une articulation à corps solide peuvent être combinés ou agencés les uns à côté des autres. Ainsi, une combinaison d'au moins un déplacement longitudinal ou transversal avec une rotation angulaire peut être obtenue.

En outre, la partie de suspension 22 peut avoir une géométrie en section transversale différente de celle du mode de réalisation illustré.

Un agencement d'un support de capteur 10 sur un pare-chocs 12 est illustré sur la figure 6. Le support de capteur 10 est agencé dans la zone latérale du pare-chocs 12. Le support de capteur 10 est fixé à la surface intérieure du pare-chocs 36 via des zones de raccordement 20. La zone de réception 14 présente, sur le côté ouvert 34, des saillies 40 (non visibles sur cette illustration). En combinaison avec le capot 38, le capteur 16 peut ainsi être maintenu serré dans la zone de réception 14.

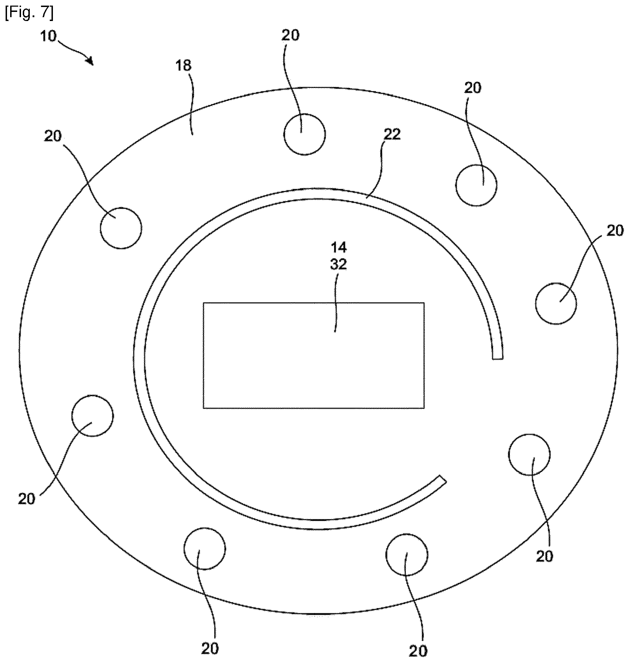

La représentation de la figure 7 montre un support de capteur 10 avec une zone de fixation 18. La zone de fixation 18 est formée de manière contenue autour de la périphérie de la zone de réception 14. Dans la zone de fixation 18, une pluralité de zones de raccordement 20 sont agencées. Celles-ci sont régulièrement réparties autour de la périphérie de la zone de réception 14. Les zones de raccordement 20 servent à la fixation avec un élément supplémentaire. Dans ce cas, la fixation peut être effectuée de préférence par soudage ou par une combinaison de soudage avec soudure de tête de rivet. Cependant, d'autres types de fixation sont possibles. Ainsi, le support de capteur 10 peut, par exemple, être vissé, collé, riveté ou même clipsé sur une surface intérieure d'un élément supplémentaire via les zones de raccordement 20. Entre la zone de raccordement 20 et la zone de réception 14, une partie de suspension 22 est agencée. La partie de suspension 22 s'étend presque sur toute la périphérie de la zone de réception 14. Dans ce cas, la partie de suspension 22 n'a pas besoin de suivre la géométrie périphérique de la zone de réception 14. Au contraire, la partie de suspension 22 peut avoir une géométrie ou un tracé arbitraire. Il est en outre envisageable que la partie de suspension 22 soit formée en tant que structure périphérique continue. Si un capteur 16 (non représenté), qui est agencé dans la zone de réception 14, est déplacé à la suite d'une impulsion externe, les forces qui surviennent peuvent être absorbées et compensées par la partie de suspension 22. Cela permet de soulager en particulier les zones de raccordement 20. Un arrachement du support de capteur 10 de la surface intérieure d'un élément supplémentaire, tel qu'un pare-chocs, peut ainsi être empêché. D'une manière générale, grâce à une partie de suspension 22 élastique, par exemple un élément élastique en forme de U, le support de capteur 10 peut présenter, d'une part, une structure suffisamment rigide pour permettre la fixation la plus fixe possible du capteur 16. Cela permet de positionner le capteur 16 de manière si précise qu'une déviation inférieure à 3° est garantie pendant la durée de vie. Par ailleurs, le support de capteur 10 est formé de manière si élastique par la partie de suspension 22 que des forces, par exemple dues à une charge de choc, peuvent être suffisamment compensées et absorbées dans la partie de suspension 22. En particulier, un arrachement du support de capteur 10 de la surface intérieure d'un élément supplémentaire peut être également empêché même si aucune autre structure de support n'est agencée derrière le capteur 16 et si le capteur 16 est agencé de manière à être suspendu presque librement.

### Liste de références

10 : support de capteur
12 : pare-chocs
14 : zone de réception
16 : capteur
18 : zone de fixation
20 : zone de raccordement
22 : partie de suspension
24 : languette
26 : gaufrage de matériau
28 : surface structurée
30 : zone de bord supérieur
32 : chambre de réception
34 : côté ouvert
36 : surface intérieure du pare-chocs
38 : capot
40 : saillie
B : largeur
L : longueur
Q : largeur de la partie de suspension
t1 : épaisseur de la paroi dans la zone centrale de la partie de suspension
t2 : épaisseur de la paroi dans la zone latérale de la partie de suspension
t3 : épaisseur de la paroi de la zone de fixation
X : direction spatiale
S : direction du capteur

## Revendications

1. Support de capteur (10) pour un véhicule, en particulier pour un agencement derrière un pare-chocs (12) du véhicule, comprenant au moins une zone de réception (14) pour recevoir un capteur (16) et au moins une zone de fixation (18) avec laquelle le support de capteur (10) peut être fixé avec un élément supplémentaire, en particulier avec un pare-chocs (12), une zone de raccordement (20) destinée à être raccordée par fixation à l'élément supplémentaire étant comprise sur au moins une partie de l'au moins une zone de fixation (18),
le support de capteur (10) étant tel que, sur au moins une zone de fixation (18), au moins une partie de suspension (22) élastique est agencée entre la zone de raccordement (20) et la zone de réception (14),
**caractérisé en ce que** la zone de raccordement (20) est conçue en tant que surface surélevée dans la zone de fixation (18), la surface surélevée étant conformée sous forme de surface de soudage, en particulier de patin de soudage,
**et en ce que** le support de capteur (10) est prévu pour être fabriqué par un procédé de moulage par injection.

2. Support de capteur (10) selon la revendication précédente, **caractérisé en ce qu'**une pluralité de zones de fixation (18) sont prévues, dans lequel au moins une zone de fixation (18) forme au moins une languette (24) comprenant la partie de suspension (22) pour relier la zone de raccordement (20) à la zone de réception (14).

3. Support de capteur (10) selon l'une des revendications précédentes, **caractérisé en ce que** l'au moins une partie de suspension (22) et au moins une zone de fixation (18) sont formées en une seule pièce.

4. Support de capteur (10) selon l'une des revendications précédentes, **caractérisé en ce que** la partie de suspension (22) présente différentes zones, une zone étant conçue pour compenser des déplacements longitudinaux, respectivement des déplacements transversaux, et une autre zone étant conçue pour compenser les rotations.

5. Support de capteur (10) selon l'une des revendications précédentes, **caractérisé en ce que** la partie de suspension (22) est formée au moins partiellement avec une section transversale amincie, la section transversale présentant au moins partiellement une épaisseur de paroi (t1) qui est inférieure à une épaisseur de paroi (t2) dans la partie de suspension (22).

6. Support de capteur (10) selon l'une des revendications précédentes, **caractérisé en ce que** l'au moins une partie de suspension (22) s'étend sur toute la largeur (B) de l'au moins une zone de fixation (18), l'au moins une partie de suspension (22) présentant de préférence une largeur inférieure (Q) par rapport à la longueur (L) de l'au moins une zone de fixation (18).

7. Support de capteur (10) selon l'une des revendications précédentes, **caractérisé en ce que** la largeur (B) de la zone de fixation (18) est formée de manière amincie dans la zone de la partie de suspension (22).

8. Support de capteur (10) selon l'une des revendications précédentes, **caractérisé en ce que** l'au moins une partie de suspension (22) est conçue pour absorber des forces de cisaillement.

9. Support de capteur (10) selon l'une des revendications précédentes, **caractérisé en ce que** la zone de réception (14) est formée en une seule pièce avec l'au moins une zone de fixation (18).

10. Support de capteur (10) selon l'une des revendications précédentes, **caractérisé en ce que** la zone de réception (14) comporte une chambre de réception (32) ouverte sur au moins un côté, l'au moins une zone de fixation (18) étant agencée sur un côté ouvert (34) de la chambre de réception (32) et formant, au moyen de la partie de suspension (22), une liaison de la zone de raccordement (20) avec la zone de réception (14), et la chambre de réception (32) ne chevauchant pas l'au moins une zone de fixation (18) en particulier dans une direction de capteur (S).

11. Support de capteur (10) selon la revendication précédente, **caractérisé en ce que** la zone de réception (14) a une forme sensiblement en forme de cuvette, et l'au moins une zone de fixation (18) est reliée à celle-ci dans une zone de bord supérieur (30) de la zone de réception (14).

12. Support de capteur (10) selon l'une des revendications précédentes, **caractérisé en ce qu'**il comprend au moins trois zones de fixation (18), au moins deux zones de fixation (18) présentant une partie de suspension (22), les parties de suspension (22) étant agencées à distance de la zone de réception (14) de sorte qu'une activité de capteur n'est pas influencée.

13. Support de capteur (10) selon l'une des revendications précédentes, **caractérisé en ce que** le support de capteur (10) est constitué d'un élastomère chargé en fibres de verre, de préférence avec une teneur en fibres de verre d'au moins 5 %.

14. Agencement d'un support de capteur (10) selon l'une des revendications précédentes sur un pare-chocs (12), **caractérisé en ce que** le support de capteur (10) est soudé à l'au moins une zone de raccordement (20) sur une surface intérieure de pare-chocs (36), le capteur (16) étant reçu dans le support de capteur (10) et étant agencé entre la surface intérieure de pare-chocs (36) et le support du capteur (10) et étant fixé au moyen de parties de suspension (22) élastiques par rapport à la surface intérieure de pare-chocs (36).

## Patentansprüche

1. Sensorhalterung (10) für ein Fahrzeug, insbesondere zur Anordnung hinter einem Stoßfänger (12) des Fahrzeugs, aufweisend mindestens einen Aufnahmebereich (14) zur Aufnahme eines Sensors (16) und mindestens einen Befestigungsbereich (18), mit dem die Sensorhalterung (10) mit einem Zusatzelement, insbesondere mit einem Stoßfänger (12), befestigbar ist, wobei an mindestens einem Teil des mindestens einen Befestigungsbereichs (18) ein Verbindungsbereich (20) zur befestigenden Verbindung mit dem Zusatzelement enthalten ist,
wobei die Sensorhalterung (10) so beschaffen ist, dass an mindestens einem Befestigungsbereich (18) mindestens ein elastischer Aufhängungsabschnitt (22) zwischen dem Verbindungsbereich (20) und dem Aufnahmebereich (14) angeordnet ist,
**dadurch gekennzeichnet, dass** der Verbindungsbereich (20) als erhabene Fläche in dem Befestigungsbereich (18) ausgebildet ist, wobei die erhabene Fläche als Schweißfläche, insbesondere als Schweißschuh, ausgebildet ist,
und dass die Sensorhalterung (10) dazu vorgesehen ist, durch ein Spritzgussverfahren hergestellt zu werden.

2. Sensorhalterung (10) nach dem vorhergehenden Anspruch, **dadurch gekennzeichnet, dass** eine Vielzahl von Befestigungsbereichen (18) vorgesehen ist, wobei mindestens ein Befestigungsbereich (18) mindestens eine Lasche (24) bildet, die den Aufhängungsabschnitt (22) zum Verbinden des Verbindungsbereichs (20) mit dem Aufnahmebereich (14) aufweist.

3. Sensorhalterung (10) nach einem der vorhergehenden Ansprüche, **dadurch gekennzeichnet, dass** der mindestens eine Aufhängungsabschnitt (22) und der mindestens eine Befestigungsbereich (18) einstückig ausgebildet sind.

4. Sensorhalterung (10) nach einem der vorhergehenden Ansprüche, **dadurch gekennzeichnet, dass** der Aufhängungsabschnitt (22) verschiedene Bereiche aufweist, wobei ein Bereich zum Ausgleich von Längsverschiebungen bzw. Querverschiebungen und ein weiterer Bereich zum Ausgleich von Drehungen ausgebildet ist.

5. Sensorhalterung (10) nach einem der vorhergehenden Ansprüche, **dadurch gekennzeichnet, dass** der Aufhängungsabschnitt (22) zumindest teilweise mit einem verjüngten Querschnitt ausgebildet ist, wobei der Querschnitt zumindest teilweise eine Wanddicke (t1) aufweist, die geringer ist als eine Wanddicke (t2) in dem Aufhängungsabschnitt (22).

6. Sensorhalterung (10) nach einem der vorhergehenden Ansprüche, **dadurch gekennzeichnet, dass** sich der mindestens eine Aufhängeabschnitt (22) über die gesamte Breite (B) des mindestens einen Befestigungsbereichs (18) erstreckt, wobei der mindestens eine Aufhängeabschnitt (22) vorzugsweise eine geringere Breite (Q) im Vergleich zur Länge (L) des mindestens einen Befestigungsbereichs (18) aufweist.

7. Sensorhalterung (10) nach einem der vorhergehenden Ansprüche, **dadurch gekennzeichnet, dass** die Breite (B) des Befestigungsbereichs (18) im Bereich des Aufhängungsabschnitts (22) verjüngt ausgebildet ist.

8. Sensorhalterung (10) nach einem der vorhergehenden Ansprüche, **dadurch gekennzeichnet, dass** der mindestens eine Aufhängungsabschnitt (22) zum Absorbieren von Scherkräften ausgebildet ist.

9. Sensorhalterung (10) nach einem der vorhergehenden Ansprüche, **dadurch gekennzeichnet, dass** der Aufnahmebereich (14) einstückig mit dem mindestens einen Befestigungsbereich (18) ausgebildet ist.

10. Sensorhalterung (10) nach einem der vorhergehenden Ansprüche, **dadurch gekennzeichnet, dass** der Aufnahmebereich (14) eine an mindestens einer Seite offene Aufnahmekammer (32) aufweist, wobei der mindestens eine Befestigungsbereich (18) an einer offenen Seite (34) der Aufnahmekammer (32) angeordnet ist und, mittels des Aufhängungsabschnitts (22) eine Verbindung des Verbindungsbereichs (20) mit dem Aufnahmebereich (14) bildet, und wobei die Aufnahmekammer (32) den mindestens einen Befestigungsbereich (18) insbesondere in einer Sensorrichtung (S) nicht überlappt.

11. Sensorhalterung (10) nach dem vorhergehenden Anspruch, **dadurch gekennzeichnet, dass** der Aufnahmebereich (14) eine im Wesentlichen schalenförmige Form hat und der mindestens eine Befestigungsbereich (18) damit in einem oberen Randbereich (30) des Aufnahmebereichs (14) verbunden ist.

12. Sensorhalterung (10) nach einem der vorhergehenden Ansprüche, **dadurch gekennzeichnet, dass** sie mindestens drei Befestigungsbereiche (18) aufweist, wobei mindestens zwei Befestigungsbereiche (18) einen Aufhängungsabschnitt (22) aufweisen, wobei die Aufhängungsabschnitte (22) in einem Abstand von dem Aufnahmebereich (14) angeordnet sind, so dass eine Sensoraktivität nicht beeinflusst wird.

13. Sensorhalterung (10) nach einem der vorhergehenden Ansprüche, **dadurch gekennzeichnet, dass** die Sensorhalterung (10) aus einem glasfasergefüllten Elastomer besteht, vorzugsweise mit einem Glasfasergehalt von mindestens 5 %.

14. Anordnung einer Sensorhalterung (10) nach einem der vorhergehenden Ansprüche an einem Stoßfänger (12), **dadurch gekennzeichnet, dass** die Sensorhalterung (10) mit dem mindestens einen Verbindungsbereich (20) an einer inneren Stoßfängerfläche (36) verschweißt ist, der Sensor (16) in der Sensorhalterung (10) aufgenommen wird und zwischen der inneren Stoßfängerfläche (36) und der Sensorhalterung (10) angeordnet ist und mittels elastischer Aufhängungsabschnitte (22) an der inneren Stoßfängerfläche (36) befestigt ist.

## Claims

1. Sensor support (10) for a vehicle, in particular for an arrangement behind a bumper (12) of the vehicle, comprising at least one receiving area (14) to receive a sensor (16) and at least one attachment area (18) with which the sensor bracket (10) can be fixed with an additional element, in particular with a bumper (12), a connection area (20) intended to be connected by attachment to the additional element being included on at least a part of the at least attachment area (18), the sensor support (10) being such that, on at least one attachment area (18), at least one elastic suspension part (22) is arranged between the connection area (20) and the receiving area (14),
**characterized in that** the connection area (20) is designed as a raised surface in the attachment area (18), the raised surface being conformed as a welding surface, in particular as a welding pad,
**and in that** the sensor holder (10) is intended to be manufactured by an injection molding process.

2. Sensor support (10) according to the preceding claim, **characterized in that** a plurality of attachment areas (18) are provided, wherein at least one attachment area (18) forms at least one tab (24) comprising the suspension part (22) to connect the connection area (20) to the receiving area (14).

3. Sensor support (10) according to one of the preceding claims, **characterized in that** the at least one suspension part (22) and at least one attachment area (18) are formed in one piece.

4. Sensor support (10) according to one of the preceding claims, **characterized in that** the suspension part (22) has different areas, one area being designed to compensate for longitudinal displacements, respectively transverse displacements, and another area being designed to compensate for rotations.

5. Sensor support (10) according to one of the preceding claims, **characterized in that** the suspension part (22) is formed at least partially with a thinned cross-section, the cross-section having at least partially a wall thickness (t1) which is less than a wall thickness (t2) in the suspension part (22).

6. Sensor support (10) according to one of the preceding claims, **characterized in that** the at least one part of suspension (22) extends over the entire width (B) of the at least one attachment area (18), the at least one suspension part (22) preferably having a width (Q) less than the length (L) of at the least one attachment area (18).

7. Sensor support (10) according to one of the preceding claims, **characterized in that** the width (B) of the attachment area (18) is formed thinly in the area of the suspension part (22).

8. Sensor support (10) according to one of the preceding claims, **characterized in that** the at least one suspension part (22) is designed to absorb shear forces.

9. Sensor support (10) according to one of the preceding claims, **characterized in that** the receiving area (14) is formed in a single piece with the at least one attachment area (18).

10. Sensor support (10) according to one of the preceding claims, **characterized in that** the reception area (14) comprises a reception chamber (32) open on at least one side, the at least one attachment area (18) being arranged on an open side (34) of the reception chamber (32) and forming, by means of the suspension part (22), a connection of the connection area (20) with the receiving area (14), and the receiving chamber (32) not overlapping the at least one fixing area (18) in particular in a sensor direction (S).

11. Sensor support (10) according to the preceding claim, **characterized in that** the receiving area (14) has a shape substantially in the form of a bowl, and the at least one attachment area (18) is connected to it in an upper edge area (30) of the receiving area (14).

12. Sensor support (10) according to one of the preceding claims, **characterized in that** it comprises at least three attachment areas (18), at least two attachment areas (18) having a suspension part (22), the suspension parts (22) being arranged distant from the receiving area (14) so that a sensor activity is not influenced.

13. Sensor support (10) according to one of the preceding claims, **characterized in that** the sensor support (10) is made of an elastomer loaded with glass fibers, preferably with a glass fiber content of at least 5%.

14. Arrangement of a sensor support (10) according to one of the preceding claims on a bumper (12), **characterized in that** the sensor support (10) is welded to the at least one connection area (20) on an inner bumper surface (36), the sensor (16) being received in the sensor holder (10) and being arranged between the inner bumper surface (36) and the sensor support (10) and being fixed by means of elastic suspension parts (22) relative to the inner surface of the bumper (36).
